# EUROPÄISCHE PATENTSCHRIFT

(11) **EP 3 191 248 B1**
(45) Veröffentlichungstag und Bekanntmachung des Hinweises auf die Patenterteilung: **04.11.2020**
(21) Anmeldenummer: 15757483.1
(22) Anmeldetag: 01.09.2015
(51) Int. Cl.: B23F 5/16, B23F 19/10

(54) **VORRICHTUNG ZUR WÄLZSCHÄLBEARBEITUNG EINES WERKSTÜCKS ZUR FERTIGUNG EINER FASE UND ZUGEHÖRIGES BETRIEBSVERFAHREN**
APPARATUS FOR SKIVING MACHINING OF A WORKPIECE FOR PRODUCTION OF A CHAMFER AND RELATED OPERATING METHOD
DISPOSITIF DE TAILLAGE EN DÉVELOPPANTE D'UNE PIÈCE POUR LA PRODUCTION D'UN CHANFREIN ET PROCÉDÉ DE FONCTIONNEMENT ASSOCIÉ

(30) Priorität: 10.09.2014 DE 102014218082
(43) Veröffentlichungstag der Anmeldung: 19.07.2017
(73) Patentinhaber: FELSOMAT GmbH & Co. KG, 75203 Königsbach-Stein (DE)
(72) Erfinder: THIJSSEN, Johan, 3740 Bilzen (BE); PESCHINA, Jürgen, 75438 Knittlingen (DE)
(74) Vertreter: Kohler Schmid Möbus Patentanwälte
(86) Internationale Anmeldenummer: PCT/EP2015/069951
(87) Internationale Veröffentlichungsnummer: WO 2016/037903

(56) Entgegenhaltungen:
- WO-A1-2012/159942
- WO-A2-2015/014448
- "Abdachen und Verzahnen in einer Aufspannung Herstellung von Zahnrädern und verzahnten Bauteilen", WERKSTATT + BETRIEB, CARL HANSER VERLAG, MÜNCHEN DE, Bd. 146, Nr. 11, 1. November 2013 (2013-11-01), Seiten 56-57, XP001587012, ISSN: 0043-2792

## Beschreibung

Die Erfindung betrifft eine Vorrichtung zur Wälzschälbearbeitung eines verzahnten Werkstücks, mit einer Werkstückspindel zum Rotieren eines verzahnten Werkstücks um eine Werkstückachse, die entlang einer x-Richtung verläuft, mit einer Werkzeugspindel zum Rotieren des verzahnten Werkzeugs um eine Werkzeugachse, und mit einer Werkzeugspindel-Halterung, an welcher die Werkzeugspindel gehalten ist und welche mittels einer motorischen Verfahreinrichtung jeweils linear in der x-Richtung, einer y-Richtung und einer z-Richtung verfahrbar ist, wobei die x-Richtung, die y-Richtung und die z-Richtung ein rechtwinkliges Koordinatensystem bilden, wobei die Werkzeugachse um einen Azimutwinkel ϕ>0° gegen die x-Richtung verschwenkt ist, wobei die Werkzeugachse weiterhin um einen Polarwinkel Θ<90° gegen die z-Richtung verschwenkt ist, wobei die Vorrichtung geeignet ist zur Durchführung eines Verfahrens zur Wälzschälbearbeitung des verzahnten Werkstücks, wobei das um die Werkzeugsachse rotierende, verzahnte Werkzeug in einer Kontaktzone an dem um die Werkstückachse rotierenden Werkstück abgeleitet, wobei das Lot der Kontaktzone auf die Werkstückachse die z- Richtung definiert, und wobei mit dem Werkzeug an dem verzahnten Werkstück eine Fase gefertigt wird.

Beim Wälzfräsen werden mit den Zähnen eines Wälzfräsers Verzahnungen in ein Werkstück geschnitten, wobei das Werkstück und der Wälzfräser bei gegenseitigem Eingriff jeweils rotiert werden. Daran anschließend wird in der Regel ein Anfasen der Zahnstirnkanten des Werkstücks durchgeführt, einerseits um Grate am Werkstück zu beseitigen, und andererseits um Kantenbrüche zu realisieren. Das Anfasen kann grundsätzlich zerspanend oder umformend erfolgen.

Beim umformenden Anfasen wird ein Abschnitt eines Anfaswerkzeugs an die Zahnstirnkanten des Werkstücks gedrückt, so dass sich das Material des Werkstücks lokal plastisch verformt. Dabei entsteht ein Sekundärgrat an der Stirnseite eines jeweiligen Zahns des Werkstücks (der typischerweise mit einem Schneidwerkzeug entfernt wird) und ein Materialaufwurf auf der Zahnflanke des jeweiligen Zahns. Dieser Materialaufwurf kann durch Feinfräsen oder Glätten beseitigt werden. Das umformende Anfasen ist somit mit mehreren Einzelschritten mit speziellen Werkzeugen bzw. Maschinen verbunden, was dieses Vorgehen relativ aufwändig macht. Ein Beispiel für eine Wälzfräsbearbeitung mit anschließendem umformenden Anfasen ist aus der EP 2 066 473 B1 bekannt geworden.

Die Fertigung von Fasen an den Zahnstirnkanten eines Werkstücks kann auch zerspanend erfolgen. Aus der EP 1 495 824 B1 ist es bekannt geworden, mit einem Entgratwerkzeug ähnlich einem Scheibenfräser zwischen die Zahnflanken zweier benachbarter Zähne eines Werkstücks einzutauchen. Am Entgratwerkzeug sind in Umfangsrichtung hintereinander Zähne angeordnet, deren Zahnstirnseiten als Spanflächen eingesetzt werden, wobei die Spanflächen im Wesentlichen parallel zur radialen Richtung und parallel zur Werkzeugachse ausgerichtet sind. Dieses Vorgehen ist auch unter dem Begriff "Chamfer Cut" bekannt geworden, vgl. beispielsweise die Firmendruckschrift der Fette GmbH, Schwarzenbeck, DE "Fräsen und Entgraten in einem Arbeitsgang. CHAMFER-CUT", undatiert, heruntergeladen am 5.6.2014, oder weiterhin die Firmendruckschrift der Liebherr-Verzahntechnik GmbH, Kempten, DE, "Wälzfräsmaschine LC 180 Chamfer Cut", datiert 9/2013.

Zwar erlaubt es das Chamfer Cut-Verfahren, ein Entgratwerkzeug auf dem selben Dorn wie das Wälzfräswerkzeug zu nutzen. Jedoch können nur vergleichsweise flache Fasenwinkel (gemessen gegenüber dem Schrägungswinkel der Zahnung des Werkstücks) gefertigt werden. Weiterhin ist axial benachbart zur Verzahnung des Werkstücks ein Freiraum radial unterhalb des Zahnfußes am Werkstück nötig; anderenfalls erzeugt das Entgratwerkzeug eine in der Regel unerwünschte Störkontur.

Zur Fertigung von Verzahnungen ist neben dem Wälzfräsen auch das Wälzschälen (Englisch "skiving") bekannt geworden, vgl. beispielsweise die Firmendruckschrift der Präwema Antriebstechnik GmbH, Eschwege, DE, "Wälzschälen", undatiert, heruntergeladen 4.6.2014. Beim Wälzschälen wird ein verzahntes Werkzeug, dessen Zahnstirnkanten im Wesentlichen senkrecht zur Werkzeugachse ausgerichtet sind, an einem Werkstück abgerollt, wobei die Werkzeugachse gegen die Werkstückachse um einen gewissen Winkel, meist um ca. 30°, verschwenkt sind ("Achskreuzwinkel"). Bei der Wälzschälbearbeitung wird das Werkzeug relativ zum Werkstück parallel zur Werkstückachse bewegt ("axialer Vorschub").

Die WO 2012/159942 A1 beschreibt ein Verfahren und eine Vorrichtung zum Wälzschälen einer Außenverzahnung an einem Werkstück, wobei als Wälzschälwerkzeug ein Innenschälring eingesetzt wird. Die Rotationsachsen, um welche das Werkstück und das Wälzschälwerkzeug während des Wälzschälens rotiert werden, sind um einen Achskreuzwinkel windschief relativ zueinander angestellt. In einer Variante wird auch ein Neigungswinkel angewandt.

Die nachveröffentlichte WO 2015/014448 A2 beschreibt ein Verfahren zum Bearbeiten von Zahnkanten und eine dazu ausgelegte Bearbeitungsstation. Ein verzahntes Bearbeitungswerkzeug wird in Wälzeingriff mit einer zu bearbeitenden Verzahnung gebracht, wobei ein von null verschiedener Achskreuzwinkel zwischen den Rotationsachsen des Bearbeitungswerkzeugs und der Verzahnung eingerichtet ist. Bevorzugt wird auch ein von null verschiedener Neigungswinkel der Rotationsachse des Bearbeitungswerkzeugs gegenüber einer orthogonal zur Verbindungsrichtung zwischen den Zentren von Verzahnung und Bearbeitungswerkzeug stehenden Ebene eingestellt.

### Aufgabe der Erfindung

Der Erfindung liegt die Aufgabe zugrunde, eine Vorrichtung vorzustellen, mit der auf einfache Weise eine Fase an einem verzahnten Werkstück gefertigt werden kann, wobei die Fertigung weniger geometrischen Einschränkungen unterliegt, und wobei eine linksseitige und eine rechtsseitige Fase sehr schnell hintereinander gefertigt werden können.

### Kurze Beschreibung der Erfindung

Diese Aufgabe wird gelöst durch eine Vorrichtung der eingangs genannten Art, die dadurch gekennzeichnet ist, dass auf der Werkzeugspindel-Halterung die Werkzeugspindel und eine weitere Werkzeugspindel zum Rotieren eines weiteren verzahnten Werkzeugs um eine weitere Werkzeugachse gehalten sind.

Mit der erfindungsgemäßen Vorrichtung kann eine Fase an einem verzahnten Werkstück spanend gefertigt werden, insbesondere gemäß einem unten erläuterten, erfindungsgemäßen Betriebsverfahrens, wobei der Fasenwinkel in einem großen Bereich gewählt werden kann, und Störkonturen am Werkstück vermieden werden können. Man beachte, dass der Azimutwinkel ϕ typischerweise 10° oder mehr, und meist 20° oder mehr, beträgt, und der Polarwinkel Θ meist 70° oder weniger beträgt.

Mit dem Werkzeug auf der Werkzeugspindel und dem weiteren Werkzeug auf der weiteren Werkzeugspindel können die linksseitige und die rechtsseitige Fase der Zähne des Werkstücks auf derselben Werkstückseite gefertigt werden. Die beiden Fasen können dadurch sehr schnell hintereinander gefertigt werden.

Im Rahmen der Erfindung wird ein modifiziertes Wälzschälverfahren zur Fertigung der Fase an den Rändern der Zahnstirnkanten eines verzahnten Werkstücks eingesetzt.

Dazu wird das verzahnte Werkzeug, welches eine übliche Verzahnung mit im Wesentlichen entlang der Werkzeugachse (Werkzeugdrehachse) verlaufenden Zähnen (gegebenenfalls mit einem gewissen Schrägungswinkel) und im Wesentlichen senkrecht zur Werkzeugachse ausgerichteten Zahnstirnkanten, die als Spanflächen genutzt werden, eingesetzt. Das Werkzeug wird zur Fertigung der Fase am Werkstück abgewälzt und dabei relativ zum Werkstück entlang der Werkstückachse (Werkstückdrehachse), d.h. in x-Richtung, verfahren. Die Schneidwirkung des Werkzeugs geht somit von einer Stirnseite des Werkzeugs aus. Der Vorschub in x-Richtung bestimmt die axiale Tiefe der Fase am Werkstück mit, und ist daher im Allgemeinen sehr viel kleiner als die axiale Dicke der Verzahnung des Werkstücks.

Abweichend zum üblichen Wälzschälen ist jedoch die Werkzeugachse nicht nur bezüglich des Azimutwinkels ϕ gegen die Werkstückachse (x-Achse) in der xy-Ebene verkippt, sondern auch aus der xy-Ebene heraus verschwenkt. Somit ist ein Polarwinkel Θ gegen die z-Achse von weniger als 90° eingestellt. Der Winkel, mit dem die Werkzeugachse aus der xy-Ebene heraus verschwenkt wird, wird hier auch mit γ bezeichnet.

Man beachte, dass der Azimutwinkel ϕ in der xy-Ebene hierbei in die Drehrichtung positiv gemessen wird, in der betragsmäßig der kleinste Winkel gegen die x-Achse erhalten wird. Der Polarwinkel Θ wird in die Drehrichtung positiv gemessen, in der betragsmäßig der kleinste Winkel gegen die z-Achse erhalten wird.

Mit dieser doppelten Verschwenkung ist es möglich, gezielt mit Kanten der Zahnstirnflächen des Werkzeugs Fasen am Werkstück zu fertigen bzw. entlang den Kanten der Zahnstirnflächen des Werkstücks entlang zu fahren, ohne Störkonturen in der Verzahnung zu erzeugen. Es wird kein Freiraum axial benachbart zur Verzahnung des Werkstücks unterhalb des Zahnfußes benötigt.

Weiterhin kann die Geometrie der Fase im Rahmen der Erfindung vielfältig variiert werden. Zwar wird der Materialabtrag (bzw. die Fasenform) am Werkstück vor allem durch die Form des Werkzeugs bestimmt, jedoch kann auch über eine Differentialgeschwindigkeit von Werkzeug und Werkstück der Materialabtrag (bzw. die Fasenform) mitbestimmt werden. Weiterhin ist es möglich, während der Fertigung der Fase zusätzlich zum Vorschub in x-Richtung einen Vorschub in z-Richtung vorzusehen, mit dem ebenfalls die Form der Fase gestaltet werden kann. Insbesondere kann auch der Fasenwinkel (das ist der Winkel zwischen der Fasenfläche und der Längsrichtung der Zahnung des Werkstücks) praktisch beliebig groß gewählt werden, insbesondere auch bei großen Schrägungswinkeln der Zahnung des Werkstücks.

Die Kontaktzone zwischen Werkstück und Werkzeug ist während der Wälzschälbearbeitung praktisch ortsfest und nur minimal ausgedehnt; soweit erforderlich, kann für die Definition der z-Richtung das Zentrum der Kontaktzone in einer zeitlich gemittelten Position verwendet werden.

### Bevorzugte Ausführungsformen der Erfindung

Bei einer bevorzugten Ausführungsform der erfindungsgemäßen Vorrichtung ist die Werkzeugspindel-Halterung mittels einer motorischen Dreheinrichtung um eine Drehachse (DA) rotierbar, insbesondere wobei die Drehachse (DA) entlang der z-Richtung verläuft. Mit der motorischen Dreheinrichtung kann die Werkzeugspindel bzw. das dort angeordnete verzahnte Werkzeug für eine Bearbeitung der beiden Seiten eines Werkstücks (bzw. der beiden Stirnseiten von dessen Verzahnung) die Position wechseln; die beiden Werkstückseiten können dann in schneller Folge bearbeitet werden. Typischerweise wird lediglich zwischen zwei um 180° verdrehten Drehpositionen zur Bearbeitung der Vorder- und Rückseite des Werkstücks gewechselt.

In einer Ausführungsform ist vorgesehen, dass die weitere Werkzeugachse um einen bezüglich des Azimutwinkels ϕ der Werkzeugachse gegengleichen, weiteren Azimutwinkel -ϕ gegenüber der x-Richtung verschwenkt ist, und dass die weitere Werkzeugachse um den gleichen Polarwinkel Θ gegen die z-Richtung verschwenkt ist wie die Werkzeugachse. Durch diese Ausrichtung der Werkzeugachse und der weiteren Werkzeugachse kann die linksseitige und die rechtsseitige Fase unter gleichen Bedingungen gefertigt werden.

Bevorzugt ist auch eine Ausführungsform, die vorsieht, dass die Vorrichtung einen Drehhalter aufweist, auf dem die Werkstückspindel und zumindest eine weitere Werkstückspindel angeordnet sind,
und dass an der Vorrichtung zumindest eine Station mit einem Wälzfräskopf für eine Wälzfräsbearbeitung eines Werkstücks auf einer der Werkstückspindeln und weiterhin eine Station mit der Werkzeugspindel-Halterung für das Anfasen eines Werkstücks auf einer anderen der Werkstückspindeln durch die Wälzschälbearbeitung eingerichtet ist. Durch den Drehhalter kann ein Werkstück schnell zwischen den Stationen wechseln, und zudem kann eine parallele Bearbeitung von Werkstücken an beiden Stationen erfolgen, wodurch eine hohe Maschinenauslastung erreicht wird.

Bei einer bevorzugten Ausführungsform liegen die x-Richtung und die z-Richtung in einer horizontalen Ebene. In diesem Fall greift das Werkzeug seitlich an das Werkstück an, so dass Späne leicht herabfallen können und nicht die weitere Werkstückbearbeitung behindern.

In den Rahmen der Erfindung fällt auch ein Verfahren zum Betrieb der erfindungsgemäßen Vorrichtung, das dadurch gekennzeichnet ist, dass das verzahnte Werkstück einer Wälzschälbearbeitung unterzogen wird, wobei das um die Werkzeugsachse rotierende, verzahnte Werkzeug in einer Kontaktzone an dem um die Werkstückachse rotierenden Werkstück abgleitet, wobei das Lot der Kontaktzone auf die Werkstückachse die z- Richtung definiert, und wobei mit dem Werkzeug an dem verzahnten Werkstück eine Fase gefertigt wird.

Bei einer vorteilhaften Variante des erfindungsgemäßen Verfahrens ist der Azimutwinkel ϕ größer oder gleich 10°, insbesondere 20°≤ϕ≤60°. Durch einen ausreichend großen Azimutwinkel kann eine Nabenbeschädigung bei der Fertigung der Fase am Werkstück vermieden werden. Der Azimutwinkel (Achskreuzwinkel) bestimmt auch in erheblichem Maße den Materialabtrag an der Fase mit. Der Azimutwinkel wird in der Praxis in der Regel zu 20° oder mehr gewählt. Man beachte, dass der Azimutwinkel ϕ hier in die Drehrichtung positiv gemessen wird, in der betragsmäßig der kleinste Winkel gegen die x-Achse erhalten wird; der größte mögliche Azimutwinkel beträgt somit 90°.

Ebenfalls vorteilhaft ist eine Variante, bei der der Polarwinkel Θ kleiner oder gleich 70° ist, insbesondere 10°≤Θ≤50°. Mit anderen Worten, die Werkzeugachse ist um einen Winkel γ von 20° oder mehr aus der xy-Ebene herausgeschwenkt. Durch einen ausreichend großen Winkel γ wird erreicht, dass bei der Fertigung der Fase keine Störkontur in der Verzahnung des Werkstücks erzeugt wird. Man beachte, dass der Polarwinkel Θ hier in die Drehrichtung positiv gemessen wird, in der betragsmäßig der kleinste Winkel gegen die z-Achse erhalten wird; der größte mögliche Polarwinkel beträgt somit 90°.

Bei einer bevorzugten Verfahrensvariante wird während der Fertigung der Fase das Werkzeug ausschließlich entlang der x-Richtung relativ auf das Werkstück zu verfahren. Dieses Vorgehen ist besonders einfach, und insbesondere für in radialer Richtung vergleichsweise kurze Fasen am Werkstück gut geeignet. Der Vorschub in x-Richtung bestimmt die axiale Tiefe der Fase am Werkstück. Zur Fertigung der Fase sind grundsätzlich nur geringe Vorschublängen in x-Richtung erforderlich, meist 3 mm oder weniger, oft sogar 1.5 mm oder weniger.

Vorteilhaft ist eine alternative Ausführungsform, bei der während der Fertigung der Fase das Werkzeug sowohl entlang der x-Richtung relativ auf das Werkstück zu verfahren wird, als auch entlang der z-Richtung relativ vom Werkstück weg verfahren wird. Durch dieses Vorgehen können in radialer Richtung ausgedehnte Fasen am Werkstück gut gefertigt werden. Insbesondere können Fasen auch am Zahnfuß des Werkstücks angebracht werden.

Bevorzugt ist eine Verfahrensvariante, bei der während der Fertigung der Fase das Werkzeug und das Werkstück synchron mit einem glatten Differentialverhältnis rotiert werden. Mit anderen Worten, das Wälzschälen erfolgt mit einem Verhältnis der Rotationsgeschwindigkeiten von Werkzeug und Werkstück, das exakt dem Verhältnis der Zähnezahlen von Werkstück und Werkzeug entspricht. Dieses Vorgehen ist besonders einfach, da der axiale Vorschub des Werkzeugs relativ zum Werkstück unabhängig von der Rotation von Werkstück und Werkzeug erfolgen kann; dieses Vorgehen kann insbesondere bei Verzahnungen des Werkstücks ohne Schrägungswinkel (achsparallelen Verzahnungen) gut eingesetzt werden.

Bei einer alternativen, vorteilhaften Verfahrensvariante werden während der Fertigung der Fase das Werkzeug und das Werkstück mit einem nicht glatten Differentialverhältnis rotiert. Mit anderen Worten, das Wälzschälen erfolgt mit einem Verhältnis der Rotationsgeschwindigkeiten von Werkzeug und Werkstück, das von dem Verhältnis der Zähnezahlen von Werkstück und Werkzeug abweicht. Durch die Differentialdrehzahl kann die Geometrie der gefertigten Fase beeinflusst werden. Insbesondere können in dieser Variante gut Fasen an einer Verzahnung des Werkstücks mit Schrägungswinkel erzeugt werden.

Bevorzugt ist weiterhin eine Verfahrensvariante, bei der an einer Stirnseite des verzahnten Werkstücks lediglich eine Fase des Werkstücks zur gleichen Zeit gefertigt wird. Mit anderen Worten, an der Stirnseite des Werkstücks (bzw. dessen Verzahnung) wird an einem jeweiligen Zahn bzw. dessen Stirnseite nur die linke Fase oder nur die rechte Fase gefertigt, nicht aber die linke und die rechte Fase gleichzeitig. Dadurch können die Fasenwinkel unabhängig voneinander eingestellt werden, insbesondere durch eine unterschiedliche Wahl von Polarwinkel, Azimutwinkel, Differentialverhältnis, x-Vorschub und/oder z-Vorschub bei der Fertigung der beiden Fasen. Im Rahmen der Erfindung werden typischerweise die beiden Fasen jeder Stirnseite eines Werkstücks, also insgesamt 4 Fasen, einzeln und in beliebiger Reihenfolge zeitlich nacheinander gefertigt.

Bei einer vorteilhaften Verfahrensvariante wird zur gleichen Zeit am verzahnten Werkstück an axial gegenüberliegenden Stirnseiten jeweils eine Fase des Werkstücks gefertigt. Durch die parallele Fertigung zweier Fasen kann die Fertigung des gesamten Werkstücks beschleunigt werden. Allerdings sind für diese Variante zwei voneinander unabhängige, verzahnte Werkzeuge notwendig, um die beiden Fasen an den Stirnseiten des Werkstücks (bzw. dessen Verzahnung) durch das erfindungsgemäße Wälzschälverfahren gleichzeitig zu fertigen.

Besonders bevorzugt ist eine Verfahrensvariante, bei der ein Werkzeug eingesetzt wird, welches im Querschnitt senkrecht zur Werkzeugachse asymmetrische Zahnflanken aufweist. Dadurch können Störkonturen am Werkstück bei der Fertigung der Fase vermieden werden, insbesondere indem ein Kontakt der Zahnflanke, die der Zahnflanke mit der aktiven Schneidkante gegenüberliegt, mit dem Werkstück vermieden wird.

Eine Weiterentwicklung dieser Verfahrensvariante sieht vor, dass das eingesetzte Werkzeug an den Zahnflanken eine aktive Schneidkante für den Kontakt mit dem Werkstück mit einem Schneidkantenwinkel ε1, gemessen gegen eine radiale Richtung, und eine gegenüberliegende, nicht aktive Schneidkante ohne Kontakt mit dem Werkstück mit einem Schneidkantenwinkel ε2, gemessen gegen die radiale Richtung, aufweist,und dass |ε1| ≥ |ε2| + 10°, bevorzugt |ε1| ≥ |ε2| + 20°. In dieser Weiterentwicklung ist die nicht aktive Schneidkante (bzw. Zahnflanke, die der Zahnflanke mit der aktiven Schneidkante gegenüberliegt) im Vergleich zur aktiven Schneidkante zurückgezogen, also näher an die radiale Richtung herangeklappt, um einen unerwünschten Kontakt mit dem Werkstück durch die nicht aktive Schneidkante, etwa in der Verzahnung des Werkstücks oder am Zahnfuß, zu vermeiden.

Bevorzugt ist auch eine Verfahrensvariante, bei der ein Werkzeug eingesetzt wird, das sich axial entlang der Werkzeugachse über 8 mm oder weniger, bevorzugt 4 mm oder weniger, weg von der Kontaktzone erstreckt. Durch eine axial kurze Bauform kann die Erzeugung von Störkonturen vermieden werden, insbesondere axial benachbart zur Verzahnung des Werkstücks unterhalb des Zahnfußes. Da die Schneidwirkung des Werkzeugs im Wesentlichen von den Zahnstirnkanten ausgeht, die im Wesentlichen senkrecht zur Werkzeugachse liegen, kommt es für die Fertigung der Fase auf die axiale Erstreckung des Werkzeugs nicht an; die axiale Dicke des Werkzeugs sollte jedoch so groß bemessen sein, so dass eine ausreichende mechanische Stabilität beim Schneiden der Fase gewährleistet ist.

Ebenfalls bevorzugt ist eine Verfahrensvariante, bei der ein Werkzeug eingesetzt wird, das sich in einem axialen Abschnitt entlang der Werkzeugachse von der Kontaktzone weg verjüngt, insbesondere konisch verjüngt. Auch dadurch kann die Erzeugung von Störkonturen am Werkstück verhindert werden, insbesondere axial benachbart zur Verzahnung des Werkstücks unterhalb des Zahnfußes.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Darstellung der Orientierung von Werkstück und Werkzeug beim erfindungsgemäßen Betriebsverfahren;
- Fig. 2a: eine schematische Darstellung der Azimutwinkelverkippung des Werkzeugs im erfindungsgemäßen Betriebsverfahren;
- Fig. 2b: eine schematische Darstellung der weiteren Polarwinkelverkippung des Werkzeugs im erfindungsgemäßen Betriebsverfahren;
- Fig. 3: eine schematische Darstellung des Abwälzens von Werkstück und Werkzeug im erfindungsgemäßen Betriebsverfahren;
- Fig. 4: eine schematische Schrägansicht einer Ausführungsform einer erfindungsgemäßen Vorrichtung zur Wälzschälbearbeitung, zur Durchführung des erfindungsgemäßen Betriebsverfahrens.

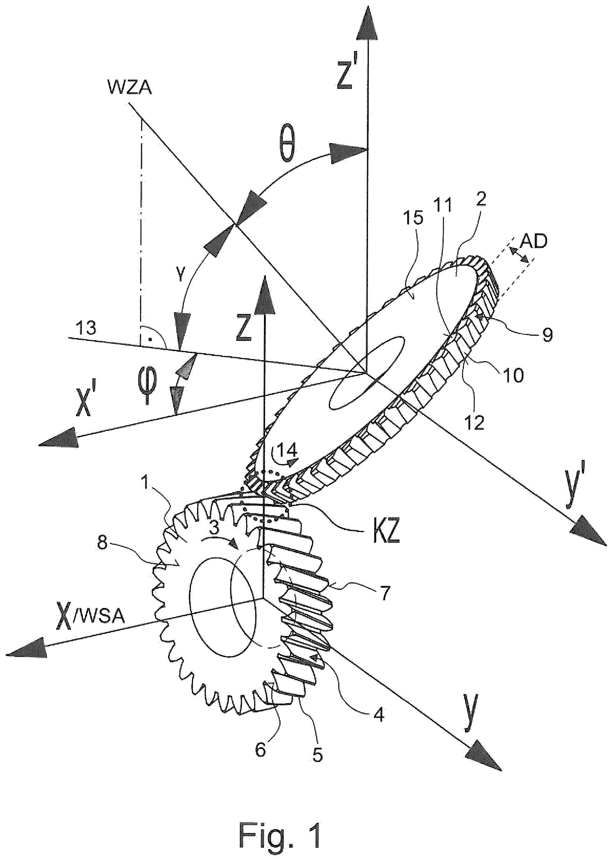

Die **Fig. 1** illustriert das erfindungsgemäße Betriebsverfahren zur Fertigung einer Fase an einem verzahnten Werkstück 1, hier ein Zahnrad, durch ein verzahntes Werkzeug 2.

Das verzahnte Werkstück 1 ist in einer nicht dargestellten Werkstückspindel gehalten, die das Werkstück 1 um eine Werkstückachse WSA rotiert (vgl. auch Pfeilrichtung 3). Die Werkstückachse WSA definiert gleichzeitig eine x-Richtung. Das Werkstück 1 weist eine Verzahnung 4 auf, bei der die einzelnen Zähne 5 im Wesentlichen parallel zur Werkstückachse WSA verlaufen, hier mit einem geringen Schrägungswinkel von ca. 15° gegen die Werkstückachse WSA. Die Zahnstirnkanten 6 der Zähne 5 liegen sowohl auf der Vorderseite 8 des Werkstücks 1 als auch auf der Rückseite 7 des Werkstücks 1 im Wesentlichen senkrecht zur Werkstückachse WSA.

Am den Kanten der Zahnstirnflächen der Zähne 5 auf der Rückseite 7 des Werkstücks 1, die dem Betrachter abgewandt ist, soll hier eine Fase angebracht werden. Zu diesem Zweck rollt das Werkstück 1 am Werkzeug 2 ab. Das Werkzeug 2 berührt das Werkstück 1 im Bereich einer Kontaktzone KZ, die in der gezeigten Variante an der Rückseite 7 des Werkstücks 1 liegt, direkt oberhalb der Werkstückachse WSA. Das Lot von der Kontaktzone KZ auf die Werkstückachse WSA bzw. die x-Achse definiert eine z-Richtung; die positive z-Richtung ist hier von der x-Achse auf die Kontaktzone KZ zu definiert. Man beachte, dass die Kontaktzone KZ in Fig. 1 übertrieben groß dargestellt ist; tatsächlich ist der räumliche Bereich, in dem die Berührung von Werkstück 1 und Werkzeug 2 stattfindet, sehr klein.

Das Werkzeug 2 weist eine Verzahnung 9 auf, wobei die Zähne 10 im Wesentlichen parallel zu einer Werkzeugachse WZA, um die das Werkzeug 2 in einer nicht dargestellten Werkzeugspindel rotiert, vgl. auch Pfeilrichtung 14, angeordnet sind. Die Zahnstirnflächen 11, 12 der Zähne 10 sind im Wesentlichen senkrecht zur Werkzeugachse WZA ausgerichtet.

Die Werkzeugachse WZA ist gemäß der Erfindung in besonderer Weise gegenüber der Werkstückachse WSA bzw. der x-Richtung orientiert; diese Orientierung kann am besten in einem rechtwinkligen Koordinatensystem mit den Achsen x, y und z und unter Bezugnahme auf übliche Winkelbezeichnungen in Kugelkoordinaten beschrieben werden.

Die Werkzeugachse WZA ist zum einen gegenüber der x-Richtung um einen Azimutwinkel ϕ, der größer ist als 0°, gegenüber der x-Richtung in der xy-Ebene verschwenkt. In der gezeigten Variante beträgt der Azimutwinkel ϕ ca. 30°. Um diesen Azimutwinkel ϕ besser zu erkennen, wurde die Projektion 13 der Werkzeugachse WZA auf die x'y'-Ebene zusätzlich eingezeichnet; die Koordinaten x', y', z' stellen ein gegenüber dem xyz-System parallel verschobenes Koordinatensystem bereit, in welchem die Verschwenkwinkel der Werkzeugachse WZA leicht unmittelbar erkannt werden können.

Die Werkzeugachse WZA ist zum anderen um einen Polarwinkel Θ gegen die z-Richtung verschwenkt, wobei dieser Polarwinkel Θ kleiner ist als 90°. Mit anderen Worten, die Werkzeugachse WZA ist um einen Winkel γ aus der x'y'-Ebene auf die z'-Achse zu herausgeschwenkt, wobei γ=90°-Θ. In der gezeigten Variante beträgt der Polarwinkel Θ ca. 50°, und der Winkel γ entsprechend ca. 40°.

Während der Fertigung der Fase werden das Werkstück 1 und das Werkzeug 2 gemäß den Pfeilrichtungen 3, 14 rotiert, und gleichzeitig das Werkzeug 2 relativ zum Werkstück 1 zumindest in x-Richtung auf das Werkstück 1 zu bewegt; falls gewünscht kann zur Anpassung der Fasenform auch noch eine relative z-Bewegung überlagert werden. Das Verhältnis der Rotationsgeschwindigkeiten (Winkelgeschwindigkeiten) entspricht dabei in der Regel dem umgekehrten Verhältnis der Zähnezahlen, d.h. die Anzahl der rotierten Zähne pro Zeit ist bei Werkstück 1 und Werkzeug 2 gleich. In der gezeigten Variante weist das Werkstück 1 über den Umfang 29 Zähne 5 auf, wohingegen das Werkzeug 2 über seinen Umfang 44 Zähne 10 aufweist. Entsprechend ist die Rotationsgeschwindigkeit des Werkstücks 1 dem 44/29-fachen der Rotationsgeschwindigkeit des Werkzeugs 2 gewählt ("synchrone Rotation mit glattem Differentialverhältnis"). Alternativ ist es auch möglich, eine Differentialgeschwindigkeit vorzusehen, d.h. die Anzahl der rotierten Zähne pro Zeit ist bei Werkstück 1 und Werkzeug 2 geringfügig unterschiedlich ("Rotation mit nicht glattem Differentialverhältnis"); beispielsweise könnte die Rotationsgeschwindigkeit des Werkstücks 1 dem 44,1/29-fachen der Rotationsgeschwindigkeit des Werkzeugs 2 betragen, um die Form der Fase zu beeinflussen.

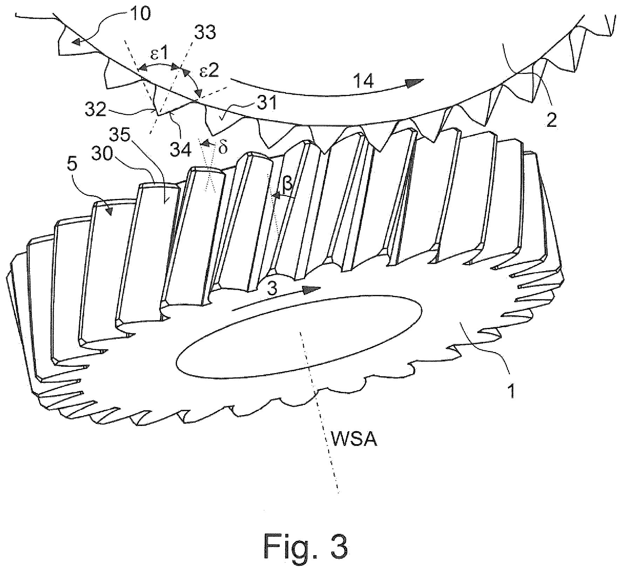

In der gezeigten Ausführungsform ist die axiale Dicke AD des Werkzeugs 2 relativ gering, insbesondere im Vergleich zur Tiefe der Verzahnung 4 des Werkstücks 1. Weiterhin verjüngt sich das Werkzeug 2 von der Oberseite 15 weg, hier über seine gesamte axiale Dicke AD in im Wesentlichen konischer Art, d.h. der äußere Radius der Zähne 10 ist nahe der Oberseite 15 (an der die Spanflächen des Werkzeugs 2 ausgebildet sind, vgl. hierzu auch Fig. 3) größer als nahe der Unterseite. Durch diese beiden Maßnahmen wird eine Berührung des Werkstücks 1 durch das Werkzeug 2 zuverlässig auf den Bereich der Kanten der oberen Zahnstirnflächen 11 der Zähne 10 beschränkt; insbesondere erzeugen die Zahnflanken der Zähne 10 entfernt von der oberen Stirnfläche 11 und die unteren Zahnstirnflächen 12 keine Störkontur am Werkstück 1.

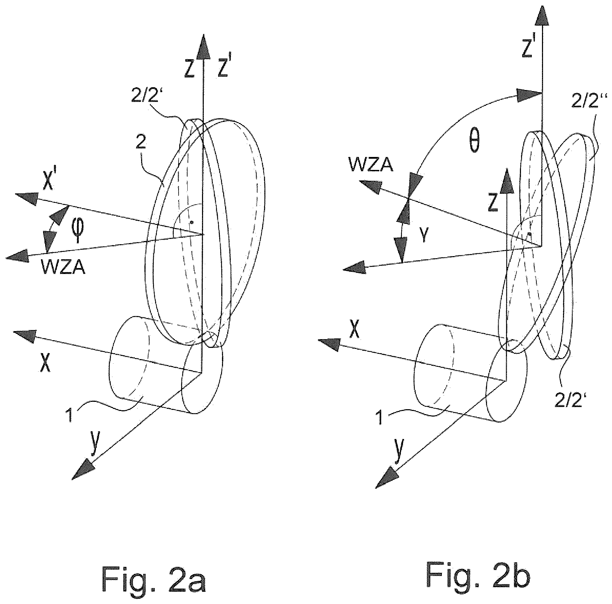

In den Figuren 2a und 2b wird die Verschwenkung der Werkzeugachse WZA gegenüber der Werkstückachse WSA nochmals in Stufen erläutert.

Ausgehend von einer zunächst parallelen Ausrichtung von Werkstückachse WSA des Werkstücks 1 (ausgerichtet entlang der x-Richtung) und der Werkzeugachse WZA des Werkzeugs 2 wird zunächst das Werkzeug 2 um den Azimutwinkel ϕ auf die y-Achse zu verschwenkt, vgl. **Fig. 2a****,** was in der mit Bzz. 2' versehenen Orientierung endet. Eine solche Verschwenkung entspricht dem herkömmlichen Wälzschälen.

Bezüglich dieser Lage erfolgt erfindungsgemäß eine weitere Verschwenkung um den Winkel γ auf die z-Richtung (bzw. die z'-Achse) zu, was mit der Orientierung 2" des Werkzeugs 2 endet, vgl. **Fig. 2b****.** Dadurch wird der Polarwinkel Θ=90°-γ eingerichtet.

Es versteht sich, dass in der Praxis die Winkel ϕ und Θ in beliebiger Reihenfolge oder auch gleichzeitig relativ zueinander eingestellt werden können; ebenso können die Winkel ϕ und Θ auch an einer Bearbeitungsmaschine fest vorgegeben sein. Für das erfindungsgemäße Betriebsverfahren relevant ist die endgültige Orientierung (hier bezeichnet mit Bzz. 2") des Werkzeugs 2 relativ zum Werkstück 1 während der Fasenfertigung.

Die **Fig. 3** erläutert näher, wie das Werkzeug 2 eine Fase 30 an den Zähnen 5 des Werkstücks 1 erzeugt. In der gezeigten Perspektive wird näherungsweise entlang der Werkzeugachse WZA auf das Werkzeug 2 und das Werkstück 1 geblickt.

Die Zähne 10 des Werkzeugs 2 weisen an ihren dem Werkstück 1 zugewandten Zahnstirnflächen 31 jeweils eine in Fig. 3 linksseitige, aktive Schneidkante 32 auf. Diese aktive Schneidkante 32 bzw. die zugehörige Zahnflanke weist hier einen Schneidkantenwinkel ε1 von ca. 45° gegen eine radiale Richtung 33 des Werkzeugs 2 auf. Eine nicht-aktive Schneidkante 34 bzw. die zugehörige Zahnflanke, die der aktiven Schneidkante 32 gegenüberliegt, weist einen Schneidkantenwinkel ε2 von ca. 35° gegen die radiale Richtung 33 auf. Die Zähne 10 weisen also asymmetrische Zahnflanken auf.

Die Zähne 10 des Werkzeugs 2 tauchen bei der Variante in Fig. 3 beim Abwälzen von Werkstück 1 und Werkzeug 2, vgl. die Pfeilrichtungen 3, 14 von der Seite in die Zwischenräume zwischen den Zähnen 5 des Werkstücks 1 ein. Dabei legt sich die aktive Schneidkante 32 zunächst an einem unteren Teil der dem Werkzeug 2 zugewandten Kante der rechtsseitigen Zahnflanke 35 eines Zahns 5 an und schabt dann entlang der Kante der Zahnflanke 35 nach oben; die Zahnstirnfläche 31 des Zahns 10 wird somit als Spanfläche genutzt. Dadurch wird die Fase 30 gefertigt. Die Fase 30 wird hier also durch eine schneidende Bewegung von (axial) außen nach innen erzeugt. Späne werden bei diesem Ablauf aus den Zwischenräumen der Zähne 5 ausgefördert. Die nicht-aktive Schneidkante 34 berührt das Werkstück 1 hingegen nicht.

Durch Verfahren des Werkzeugs 2 zumindest mit einer Bewegungskomponente entlang der Werkstückachse WSA auf das Werkstück 1 zu wird die Fase 30 vergrößert (d.h. vertieft und verbreitert).

In der gezeigten Variante beträgt der Fasenwinkel δ, das ist der Winkel zwischen der Fläche der Fase 30 und der benachbarten Fläche der Zahnflanke 35 (die hier mit einem Schrägungswinkel β von ca. 25° verläuft) bei den Zähnen 35 näherungsweise 30°.

Man beachte, dass durch Umkehrung der Rotationsrichtungen auch ein Schaben der aktiven Schneidkante 32 von oben nach unten entlang der Kante der Zahnflanke 35 des Zahns 5 eingerichtet werden kann.

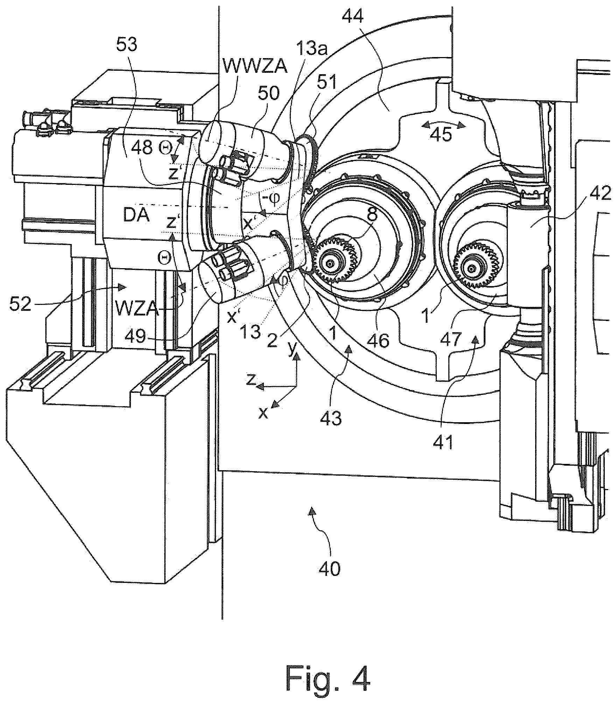

Die **Fig. 4** zeigt eine erfindungsgemäße Vorrichtung 40 (Bearbeitungsmaschine) zum Anfasen von verzahnten Werkstücken 1, insbesondere gemäß des erfindungsgemäßen Betriebsverfahrens.

Die Vorrichtung 40 verfügt über eine Station 41 zur Wälzfräsbearbeitung von Werkstücken 1 mit einem Wälzfräser 42, der mit üblichen Rotations- und Bewegungsachsen ausgestattet ist. Weiterhin verfügt die Vorrichtung 40 über eine Station 43 zum Anfasen von Werkstücken 1, die unten näher erläutert wird; die Station 43 wird meist auch für Werkstückwechsel genutzt, da das Anfasen eines Werkstücks 1 meist weniger Zeit benötigt als das Wälzfräsen eines Werkstücks 1.

In der gezeigten Ausführungsform ist ein Drehhalter 44 vorgesehen, der in Pfeilrichtung 45 rotierbar ist und dadurch zwei Werkstückspindeln 46, 47 an den Stationen 41, 43 positionieren und insbesondere vertauschen kann. Der Drehhalter 44 ist hier um eine horizontale Achse drehbar, und die Werkstückspindelachsen, um welche die Werkstücke 1 drehbar sind, sind hier ebenfalls horizontal angeordnet. Typischerweise werden Werkstücke 1 an der Station 43 auf einer Werkstückspindel 46, 47 aufgespannt, durch Drehen des Drehhalters 44 zur Station 41 zum Wälzfräsen verbracht, durch Drehen des Drehhalters 44 zurück zur Station 41 zum Anfasen verbracht und wieder ausgespannt; dieser Ablauf findet an beiden Werkstückspindeln 46, 47 parallel und um eine halbe Phase versetzt statt.

Im Folgenden wird die Station 43 zum Anfasen von Werkstücken 1 näher erläutert.

Auf einer Werkzeugspindel-Halterung 48 sind eine Werkzeugspindel 49 mit einem verzahnten Werkzeug 2 und auch eine weitere Werkzeugspindel 50 mit einem weiteren verzahnten Werkzeug 51 angeordnet. Die Werkstückspindel-Halterung 48 kann entlang der zueinander orthogonalen Richtungen x, y, z mittels einer motorischen Verfahreinrichtung (Kreuzschlittensystem) 52 linear verfahren werden, und auch mit einer motorischen Dreheinrichtung 53 um eine Drehachse DA, die parallel zur z-Richtung verläuft, gedreht werden. Die x-Richtung ist hierbei horizontal und parallel zur Werkstückspindelachse der Werkstückspindel 46 ausgerichtet, die y-Richtung verläuft vertikal, und die z-Richtung wiederum horizontal.

In der gezeigten Verfahrposition wird gerade mit dem Werkzeug 2 auf der Werkzeugspindel 49 am Werkstück 1 auf der Werkstückspindel 46 an dessen Unterseite eine erste Fase gefertigt; das Werkzeug 2 kontaktiert dazu das Werkstück 1 von der linken Seite, also von der z-Richtung her kommend. Zur Fertigung der zweiten Fase an der Unterseite wird die Werkzeugspindel-Halterung 48 mit der motorischen Verfahreinrichtung (Kreuzschlittensystem) 52 so umpositioniert, dass das weitere Werkzeug 51 auf der weiteren Werkzeugspindel 50 das Werkstück 1 von der linken Seite kontaktiert.

Man beachte, dass die Werkzeugachse WZA der Werkstückspindel 49 um einen Azimutwinkel ϕ gegen die x-Richtung nach unten verschwenkt ist (vgl. die zugehörige parallelverschobene x'-Achse und die Projektion 13 der Werkzeugachse WZA), und dass die weitere Werkzeugachse WWZA der weiteren Werkstückspindel 50 um einen gegengleichen Azimutwinkel -ϕ gegen die x-Richtung nach oben verschwenkt ist (vgl. die zugehörige parallelverschobene x'-Achse und die Projektion 13a der weiteren Werkzeugachse WWZA). Man beachte weiterhin, dass die Werkzeugachse WZA der Werkstückspindel 49 um einen Polarwinkel Θ gegen die z-Richtung verschwenkt ist (vgl. die zugehörige parallelverschobnene Achse z'), und die weitere Werkzeugachse WWZA der weiteren Werkstückspindel 50 um den gleichen Polarwinkel Θ gegen die z-Richtung verschwenkt ist (vgl. wiederum die zugehörige parallelverschobene Achse z').

Zur Fertigung der beiden Fasen an der Oberseite 8 des Werkstücks 1 in der Werkstückspindel 46 wird die Werkzeugspindel-Halterung 48 mit der motorischen Dreheinrichtung 53 um 180° um die Drehachse DA geschwenkt. Sodann kann mit dem Werkzeug 2 die erste Fase und mit dem weiteren Werkzeug 51 die zweite Fase an der Oberseite 8 des Werkstücks 1 angebracht werden (nicht näher dargestellt).

Es wird angemerkt, dass die insgesamt vier Fasen grundsätzlich in beliebiger Reihenfolge am Werkstück 1 angebracht werden können. Allerdings ist es in der Regel zeitlich vorteilhaft, die beiden Fasen jeweils einer Seite des Werkstücks 1 (Oberseite oder Unterseite) direkt aufeinanderfolgend zu fertigen.

Im Rahmen der Erfindung wird ein Verfahren zur Fertigung einer Fase (30) an einem verzahnten Werkstück (1) eingesetzt, wobei ein verzahntes Werkzeug (2) mit als Spanflächen dienenden Zahnstirnkanten (11, 31), die näherungsweise senkrecht zur Werkzeugachse (WZA) verlaufen, am Werkstück (1) abgewälzt wird. Dabei gleitet eine aktive Schneidkante (32) ausgebildet an einer seitlichen Kante der Spanfläche (11, 31) an den Kanten der Zahnstirnflächen (6) des Werkstücks (1) ab. Die Werkzeugachse (WZA) ist nicht nur mit einem Azimutwinkel ϕ gegen die Werkstückachse (WSA) verschwenkt wie beim herkömmlichen Wälzschälen, sondern zusätzlich mit einem Polarwinkel Θ kleiner 90° gegen das Lot der Kontaktzone (KZ) von Werkstück (1) und Werkzeug (2) auf die Werkstückachse (WSA) verschwenkt. Die Anbringung der Fasen kann im Rahmen der Erfindung an verzahnten Werkstücken aller Art, beispielsweise Zahnrädern, Achsen mit verzahnten Bereichen oder Getrieben, eingesetzt werden, insbesondere wenn am Werkstück axial jenseits der Verzahnung kein oder nur wenig Freiraum vorhanden ist und/oder große Fasenwinkel gewünscht sind.

## Patentansprüche

1. Vorrichtung (40) zur Wälzschälbearbeitung eines verzahnten Werkstücks (1),
mit einer Werkstückspindel (46, 47) zum Rotieren eines verzahnten Werkstücks (1) um eine Werkstückachse (WSA), die entlang einer x-Richtung verläuft,
mit einer Werkzeugspindel (49) zum Rotieren eines verzahnten Werkzeugs (2) um eine Werkzeugachse (WZA),
und mit einer Werkzeugspindel-Halterung (48), an welcher die Werkzeugspindel (49) gehalten ist und welche mittels einer motorischen Verfahreinrichtung (52) jeweils linear in der x-Richtung, einer y-Richtung und einer z-Richtung verfahrbar ist, wobei die x-Richtung, die y-Richtung und die z-Richtung ein rechtwinkliges Koordinatensystem bilden,
wobei die Werkzeugachse (WZA) um einen Azimutwinkel ϕ>0° gegen die x-Richtung verschwenkt ist,
wobei die Werkzeugachse (WZA) weiterhin um einen Polarwinkel Θ<90° gegen die z-Richtung verschwenkt ist,
wobei die Vorrichtung (40) geeignet ist zur Durchführung eines Verfahrens zur Wälzschälbearbeitung des verzahnten Werkstücks (1), wobei das um die Werkzeugsachse (WZA) rotierende, verzahnte Werkzeug (2) in einer Kontaktzone (KZ) an dem um die Werkstückachse (WSA) rotierenden Werkstück (1) abgleitet,
wobei das Lot der Kontaktzone (KZ) auf die Werkstückachse (WSA) die z- Richtung definiert,
und wobei mit dem Werkzeug (2) an dem verzahnten Werkstück (1) eine Fase (30) gefertigt wird,
**dadurch gekennzeichnet,**
**dass** auf der Werkzeugspindel-Halterung (48) die Werkzeugspindel (49) und eine weitere Werkzeugspindel (50) zum Rotieren eines weiteren verzahnten Werkzeugs (51) um eine weitere Werkzeugachse (WWZA) gehalten sind.

2. Vorrichtung (40) nach Anspruch 1, **dadurch gekennzeichnet, dass** die Werkzeugspindel-Halterung (48) mittels einer motorischen Dreheinrichtung (53) um eine Drehachse (DA) rotierbar ist.

3. Vorrichtung (40) nach Anspruch 1 oder 2, **dadurch gekennzeichnet, dass** die weitere Werkzeugachse (WWZA) um einen bezüglich des Azimutwinkels ϕ der Werkzeugachse (WZA) gegengleichen, weiteren Azimutwinkel -ϕ gegenüber der x-Richtung verschwenkt ist, und dass die weitere Werkzeugachse (WWZA) um den gleichen Polarwinkel Θ gegen die z-Richtung verschwenkt ist wie die Werkzeugachse (WZA).

4. Vorrichtung (40) nach einem der Ansprüche 1 bis 3, **dadurch gekennzeichnet, dass** die Vorrichtung (40) einen Drehhalter (44) aufweist, auf dem die Werkstückspindel (46) und zumindest eine weitere Werkstückspindel (47) angeordnet sind,
und dass an der Vorrichtung (40) zumindest eine Station (41) mit einem Wälzfräskopf (42) für eine Wälzfräsbearbeitung eines Werkstücks (1) auf einer der Werkstückspindeln (46, 47) und weiterhin eine Station (43) mit der Werkzeugspindel-Halterung (48) für das Anfasen eines Werkstücks (1) auf einer anderen der Werkstückspindeln (46, 47) durch die Wälzschälbearbeitung eingerichtet ist.

5. Vorrichtung (40) nach einem der Ansprüche 1 bis 4, **dadurch gekennzeichnet, dass** die x-Richtung und die z-Richtung in einer horizontalen Ebene liegen.

6. Verfahren zum Betrieb einer Vorrichtung (40) nach einem der Ansprüche 1 bis 5, **dadurch gekennzeichnet, dass** das verzahnte Werkstück (1) einer Wälzschälbearbeitung unterzogen wird, wobei das um die Werkzeugsachse (WZA) rotierende, verzahnte Werkzeug (2) in einer Kontaktzone (KZ) an dem um die Werkstückachse (WSA) rotierenden Werkstück (1) abgleitet, wobei das Lot der Kontaktzone (KZ) auf die Werkstückachse (WSA) die z- Richtung definiert, und wobei mit dem Werkzeug (2) an dem verzahnten Werkstück (1) eine Fase (30) gefertigt wird.

7. Verfahren nach Anspruch 6, **dadurch gekennzeichnet, dass** der Azimutwinkel ϕ größer oder gleich 10° ist.

8. Verfahren nach Anspruch 6 oder 7, **dadurch gekennzeichnet, dass** der Polarwinkel Θ kleiner oder gleich 70° ist.

9. Verfahren nach einem der Ansprüche 6 bis 8, **dadurch gekennzeichnet, dass** während der Fertigung der Fase (30) das Werkzeug (2) ausschließlich entlang der x-Richtung relativ auf das Werkstück (1) zu verfahren wird.

10. Verfahren nach einem der Ansprüche 6 bis 8, **dadurch gekennzeichnet, dass** während der Fertigung der Fase (30) das Werkzeug (2) sowohl entlang der x-Richtung relativ auf das Werkstück (1) zu verfahren wird, als auch entlang der z-Richtung relativ vom Werkstück (1) weg verfahren wird.

11. Verfahren nach einem der Ansprüche 6 bis 10, **dadurch gekennzeichnet, dass** während der Fertigung der Fase (30) das Werkzeug (2) und das Werkstück (1) synchron mit einem glatten Differentialverhältnis rotiert werden.

12. Verfahren nach einem der Ansprüche 6 bis 10, **dadurch gekennzeichnet, dass** während der Fertigung der Fase (30) das Werkzeug (2) und das Werkstück (1) mit einem nicht glatten Differentialverhältnis rotiert werden.

13. Verfahren nach einem der Ansprüche 6 bis 12, **dadurch gekennzeichnet, dass** an einer Stirnseite des verzahnten Werkstücks (1) lediglich eine Fase (30) des Werkstücks (1) zur gleichen Zeit gefertigt wird.

14. Verfahren nach einem der Ansprüche 6 bis 13, **dadurch gekennzeichnet, dass** zur gleichen Zeit am verzahnten Werkstück (1) an axial gegenüberliegenden Stirnseiten jeweils eine Fase (30) des Werkstücks (1) gefertigt wird.

15. Verfahren nach einem der Ansprüche 6 bis 14, **dadurch gekennzeichnet, dass** ein Werkzeug (2) eingesetzt wird, welches im Querschnitt senkrecht zur Werkzeugachse (WZA) asymmetrische Zahnflanken aufweist.

16. Verfahren nach Anspruch 15, **dadurch gekennzeichnet, dass** das eingesetzte Werkzeug (2) an den Zahnflanken eine aktive Schneidkante (32) für den Kontakt mit dem Werkstück (1) mit einem Schneidkantenwinkel ε1, gemessen gegen eine radiale Richtung (33), und eine gegenüberliegende, nicht aktive Schneidkante (34) ohne Kontakt mit dem Werkstück (1) mit einem Schneidkantenwinkel ε2, gemessen gegen die radiale Richtung (33), aufweist,
und dass |ε1| ≥ |ε2| + 10°.

17. Verfahren nach einem der Ansprüche 6 bis 16, **dadurch gekennzeichnet, dass** ein Werkzeug (2) eingesetzt wird, das sich axial entlang der Werkzeugachse (WZA) über 8 mm oder weniger weg von der Kontaktzone (KZ) erstreckt.

18. Verfahren nach einem der Ansprüche 6 bis 17, **dadurch gekennzeichnet, dass** ein Werkzeug (2) eingesetzt wird, das sich in einem axialen Abschnitt entlang der Werkzeugachse (WZA) von der Kontaktzone (KZ) weg verjüngt.

## Claims

1. An apparatus (40) for skiving machining a toothed workpiece (1)
having a workpiece spindle (46, 47) for rotating a toothed workpiece (1) about a workpiece axis (WSA) that extends in an x direction,
having a tool spindle (49) for rotating a toothed tool (2) about a tool axis (WZA),
and having a tool-spindle mount (48) on which the tool spindle (49) is held and which is displaceable in each case linearly in the x direction, a y direction and a z direction by means of a motorized displacement device (52), wherein the x direction, the y direction and the z direction form a Cartesian coordinate system,
wherein the tool axis (WZA) is tilted through an azimuth angle ϕ>0° with respect to the x direction,
wherein the tool axis (WZA) is furthermore tilted through a polar angle Θ<90° with respect to the z direction,
wherein the apparatus (40) is suitable for performing a method for skiving machining a toothed workpiece (1),
wherein the toothed tool (2), rotating about the tool axis (WZA), slides over the workpiece (1), rotating about the workpiece axis (WSA), in a contact zone (KZ),
wherein the perpendicular of the contact zone (KZ) to the workpiece axis (WSA) defines the z direction, and wherein a chamfer (30) is produced on the toothed workpiece (1) with the tool (2),
**characterized in**
**that** the tool spindle (49) and a further tool spindle (50) for rotating a further toothed tool (51) about a further tool axis (WWZA) are held on the tool-spindle mount (48).

2. The apparatus (40) as claimed in claim 1, **characterized in that** the tool-spindle mount (48) is rotatable about an axis of rotation (DA) by means of a motorized turning device (53).

3. The apparatus (40) according to claim 1 or 2, **characterized in that** the further tool axis (WWZA) is tilted through a further azimuth angle -ϕ, mirror-inverted in relation to the azimuth angle ϕ of the tool axis (WZA), with respect to the x direction, and **in that** the further tool axis (WWZA) is tilted through the same polar angle Θ with respect to the z direction as the tool axis (WZA).

4. The apparatus (40) as claimed in one of claims 1 to 3, **characterized in that** the apparatus (40) has a turning holder (44) on which the workpiece spindle (46) and at least one further workpiece spindle (47) are arranged,
and **in that** at least one station (41) having a gear hobbing head (42) for hobbing machining a workpiece (1) on one of the workpiece spindles (46, 47) and furthermore a station (43) having the tool-spindle mount (48) for chamfering a workpiece (1) on another of the workpiece spindles (46, 47) by way of the skiving machining operation are set up on the apparatus (40).

5. The apparatus (40) as claimed in one of claims 1 to 4, **characterized in that** the x direction and the z direction lie in a horizontal plane.

6. A method for operating a device (40) according to one of the claims 1 to 5, **characterized in that** the toothed workpiece (1) is subjected to skiving machining, wherein the toothed tool (2), rotating about the tool axis (WZA), slides over the workpiece (1), rotating about the workpiece axis (WSA), in a contact zone (KZ),
wherein the perpendicular of the contact zone (KZ) to the workpiece axis (WSA) defines the z direction, and wherein a chamfer (30) is produced on the toothed workpiece (1) with the tool (2).

7. The method as claimed in claim 6, **characterized in that** the azimuth angle ϕ is greater than or equal to 10°.

8. The method as claimed in claim 6 or 7, **characterized in that** the polar angle Θ is less than or equal to 70°.

9. The method as claimed in one of claims 6 to 8, **characterized in that**, while the chamfer (30) is being produced, the tool (2) is moved in a relative manner only in the x direction toward the workpiece (1) .

10. The method as claimed in one of claims 6 to 8 **characterized in that**, while the chamfer (30) is being produced, the tool (2) is moved both in a relative manner in the x direction toward the workpiece (1) and in a relative manner in the z direction away from the workpiece (1).

11. The method as claimed in one of claims 6 to 10, **characterized in that**, while the chamfer (30) is being produced, the tool (2) and the workpiece (1) are rotated synchronously with a smooth differential ratio.

12. The method as claimed in one of claims 6 to 10, **characterized in that**, while the chamfer (30) is being produced, the tool (2) and the workpiece (1) are rotated with a non-smooth differential ratio.

13. The method as claimed in one of the claims 6 through 12, **characterized in that** only one chamfer (30) of the workpiece (1) is produced at a time on an end side of the toothed workpiece (1).

14. The method as claimed in one of the claims 6 through 13, **characterized in that** a chamfer (30) of the workpiece (1) is produced on respective axially opposite end sides of the toothed workpiece (1) at the same time.

15. The method as claimed in one of the claims 6 through 14, **characterized in that** a tool (2) is used which has asymmetrical tooth flanks in cross section perpendicularly to the tool axis (WZA).

16. The method as claimed in claim 15, **characterized in that** the tool (2) used has, on its tooth flanks, an active cutting edge (32) for contact with the workpiece (1), having a cutting-edge angle ε1 measured with respect to a radial direction (33), and an opposite, non-active cutting edge (34) without contact with the workpiece (1), having a cutting-edge angle ε2 measured with respect to the radial direction (33),
and **in that** |ε1|≥|ε2|+10°.

17. The method as claimed in one of the claims 6 through 16, **characterized in that** a tool (2) is used which extends axially along the tool axis (WZA) 8 mm or less away from the contact zone (KZ).

18. The method as claimed in one of the claims 6 through 17, **characterized in that** a tool (2) is used which narrows away from the contact zone (KZ) in an axial section along the tool axis (WZA).

## Revendications

1. Dispositif (40) destiné à tailler une pièce dentée (1), ledit dispositif comprenant
une broche de pièce (46, 47) destiné à faire tourner une pièce dentée (1) sur un axe de pièce (WSA) qui s'étend le long d'une direction x,
une broche d'outil (49) destinée à faire tourner un outil denté (2) sur un axe d'outil (WZA),
et un support de broche d'outil (48) sur lequel la broche d'outil (49) est maintenue et qui peut être déplacé linéairement dans la direction x, une direction y et une direction z à l'aide d'un moyen (52) de déplacement par moteur, la direction x, la direction y et la direction z formant un système de coordonnées rectangulaires,
l'axe d'outil (WZA) étant pivoté d'un angle azimutal ϕ > 0° par rapport à la direction x,
l'axe d'outil (WZA) étant en outre pivoté d'un angle polaire Θ < 90° par rapport à la direction z,
le dispositif (40) étant approprié pour mettre en œuvre un procédé de taillage de la pièce dentée (1),
l'outil denté (2) en rotation sur l'axe d'outil (WZA) glissant dans une zone de contact (KZ) au niveau de la pièce (1) en rotation sur l'axe de pièce (WSA),
la perpendiculaire de la zone de contact (KZ) à l'axe de pièce (WSA) définissant la direction z,
et un chanfrein (30) étant réalisé sur la pièce dentée (1) à l'aide de l'outil (2),
**caractérisé en ce que**
la broche d'outil (49) et une autre broche d'outil (50) sont maintenues sur le support de broche d'outil (48) pour faire tourner un autre outil denté (51) sur un autre axe d'outil (WWZA).

2. Dispositif (40) selon la revendication 1, **caractérisé en ce que** le support de broche d'outil (48) peut être entraîné en rotation sur un axe de rotation (DA) à l'aide d'un moyen (53) de rotation par moteur.

3. Dispositif (40) selon la revendication 1 ou 2, **caractérisé en ce que** l'autre axe d'outil (WWZA) est pivoté par rapport à la direction x d'un autre angle azimutal -ϕ qui est égal et opposé à l'angle azimutal ϕ de l'axe d'outil (WZA) et **en ce que** l'autre axe d'outil (WWZA) est pivoté dans la direction opposée à la direction z du même angle polaire Θ que l'axe d'outil (WZA) .

4. Dispositif (40) selon l'une des revendications 1 à 3, **caractérisé en ce que** le dispositif (40) comporte un support rotatif (44) sur lequel sont disposées la broche de pièce (46) et au moins une autre broche de pièce (47),
et **en ce que**, sur le dispositif (40), au moins un poste (41) pourvu d'une tête de taillage (42) est adapté pour tailler une pièce (1) placée sur l'une des broches de pièce (46, 47) et en outre un poste (43) pourvu du support de broche d'outil (48) est adapté pour chanfreiner par taillage une pièce (1) placée sur une autre des broches de pièce (46, 47).

5. Dispositif (40) selon l'une des revendications 1 à 4, **caractérisé en ce que** la direction x et la direction z se trouvent dans un plan horizontal.

6. Procédé de fonctionnement d'un dispositif (40) selon l'une des revendications 1 à 5, **caractérisé en ce que** la pièce dentée (1) est soumise à un processus de taillage, l'outil denté (2) en rotation sur l'axe d'outil (WZA) glissant dans une zone de contact (KZ) sur la pièce (1) en rotation sur l'axe de pièce (WSA), la perpendiculaire de la zone de contact (KZ) à l'axe de pièce (WSA) définissant la direction z, et un chanfrein (30) étant réalisé avec l'outil (2) sur la pièce dentée (1).

7. Procédé selon la revendication 6, **caractérisé en ce que** l'angle azimutal ϕ est supérieur ou égal à 10°.

8. Procédé selon la revendication 6 ou 7, **caractérisé en ce que** l'angle polaire Θ est inférieur ou égal à 70°.

9. Procédé selon l'une des revendications 6 à 8, **caractérisé en ce que**, pendant de la réalisation du chanfrein (30), l'outil (2) est déplacé exclusivement le long de la direction x par rapport à la pièce (1).

10. Procédé selon l'une des revendications 6 à 8, **caractérisé en ce que**, pendant la réalisation du chanfrein (30), l'outil (2) doit être déplacé à la fois le long de la direction x pour être rapproché de la pièce (1) et le long la direction z pour être éloigné de la pièce (1).

11. Procédé selon l'une des revendications 6 à 10, **caractérisé en ce que**, pendant la réalisation du chanfrein (30), l'outil (2) et la pièce (1) sont mis en rotation de manière synchrone avec un rapport différentiel lisse.

12. Procédé selon l'une des revendications 6 à 10, **caractérisé en ce que**, pendant la réalisation du chanfrein (30), l'outil (2) et la pièce (1) tournent avec un rapport différentiel non lisse.

13. Procédé selon l'une des revendications 6 à 12, **caractérisé en ce qu'**un seul chanfrein (30) de la pièce (1) est réalisé en même temps sur une face d'extrémité de la pièce dentée (1).

14. Procédé selon l'une des revendications 6 à 13, **caractérisé en ce qu'**un chanfrein (30) de la pièce (1) est réalisé en même temps sur la pièce dentée (1) sur chacune des faces d'extrémité axialement opposées.

15. Procédé selon l'une des revendications 6 à 14, **caractérisé en ce que** l'on utilise un outil (2) qui comporte des flancs de dents asymétriques dans la vue en coupe transversale perpendiculaire à l'axe d'outil (WZA) .

16. Procédé selon la revendication 15, **caractérisé en ce que** l'outil (2) utilisé comporte sur les flancs de dent une arête de coupe active (32) destinée à venir en contact avec la pièce (1) suivant un angle d'arête de coupe ε1, mesuré par rapport à une direction radiale (33), et une arête de coupe inactive opposée (34) sans contact avec la pièce (1) suivant un angle de coupe ε2, mesuré par rapport à la direction radiale (33),
et **en ce que** |ε1| ≥ |ε2| + 10°.

17. Procédé selon l'une des revendications 6 à 16, **caractérisé en ce que** l'on utilise un outil (2) qui s'étend depuis la zone de contact (KZ) axialement le long de l'axe d'outil (WZA) sur 8 mm ou moins.

18. Procédé selon l'une des revendications 6 à 17, **caractérisé en ce que** l'on utilise un outil (2) qui s'amincit depuis la zone de contact (KZ) dans une portion axiale le long de l'axe d'outil (WZA).
